# FASCICULE DE BREVET EUROPEEN

(11) **EP 1 042 155 B1**
(45) Date de publication et mention de la délivrance du brevet: **27.03.2002**
(21) Numéro de dépôt: 98964551.0
(22) Date de dépôt: 30.12.1998
(51) Int. Cl.: B62D 7/16, F16C 11/06

(54) **ARTICULATION A ROTULE POUR DIRECTION DE VEHICULE AUTOMOBILE**
KUGELGELENK FÜR EINE KRAFTFAHRZEUGLENKUNG
BALL JOINT FOR MOTOR VEHICLE STEERING

(30) Priorité: 31.12.1997 FR 9716769
(43) Date de publication de la demande: 11.10.2000
(73) Titulaire: Scoma, 28240 La Loupe (FR)
(72) Inventeur: REDELE, Jean, F-75008 Paris (FR)
(74) Mandataire: CAPRI SARL
(86) Numéro de dépôt international: FR9802915
(87) Numéro de publication internationale: WO9935020

(56) Documents cités:
- FR-A- 2 560 140
- GB-A- 1 336 087

## Description

La présente invention a pour objet une articulation à rotule, notamment pour système de direction de véhicule automobile. Par véhicule automobile, on entend ici aussi bien une voiture, un camion, un tracteur ou un véhicule industriel quelconque tel qu'un engin de travaux. Bien que l'articulation à rotule de la présente invention trouve dans cette application une utilisation très répandue, il sera entendu qu'il ne sort pas du cadre de l'invention d'utiliser une telle articulation à rotule dans d'autres applications.

On sait que les articulations à rotule peuvent être soumises à des efforts importants et qu'elles doivent être d'une fiabilité absolue, en particulier dans les systèmes de direction des véhicules automobiles. On est donc conduit à réaliser des pièces de haute qualité. Il en résulte des coûts de matière et de fabrication qui ont une incidence sur le prix de revient.

Une telle articulation à rotule est notamment décrite dans le document FR-2 560 140. Elle comporte essentiellement un boîtier avec une queue de boîtier, en une seule pièce, une rotule présentant une tête engagée dans une ouverture du boîtier, un coussinet inférieur et un coussinet supérieur, un ressort appliquant le coussinet supérieur contre la tête de la rotule, et de ce fait celle-ci contre le coussinet inférieur.

On a désigné les coussinets par les qualificatifs "supérieur" et "inférieur". Il est clair que cette application est arbitraire et correspond à la position représenté sur le dessin, et ces dénominations ont pour but une commodité de désignation dans la description.

Un problème inévitable avec ce genre d'articulation à rotule est l'usure par frottement de la tête de la rotule et/ou du coussinet inférieur. En effet, en fonctionnement, la tête de la rotule tourne à l'intérieur du logement formé par les coussinets. Il s'ensuit par conséquent une abrasion continue presque imperceptible mais qui a tout de même pour effet à la longue de rogner la tête de la rotule et/ou le coussinet inférieur de sorte que la rotule n'est plus parfaitement sphérique. La perte de matière a pour conséquence de générer un jeu qui est fort heureusement directement compensé par le coussinet supérieur sollicité par le ressort. Ainsi, le coussinet supérieur remplit la fonction de rattrapage de jeu à mesure que la tête de la rotule et/ou le coussinet inférieur s'use. Cette usure est donc un problème bien connu. Dans la pratique, l'état d'usure n'est pas facilement vérifiable. Une technique très simple utilisée par les mécaniciens consiste à se saisir de l'arbre sur lequel la tête de la rotule est installée et de déplacer cet arbre de manière à faire bouger la rotule dans son logement. Cependant, avec cette technique tout à fait empirique, il est très difficile de se faire une idée de l'état d'usure de la rotule, étant donné qu'il est difficile de percevoir si la rotule a effectivement un jeu ou si le déplacement de la tête dans son logement est simplement dû au déplacement du coussinet supérieur sollicité par le ressort. Il est par conséquent très délicat de savoir si une rotule est encore apte à son usage. Il est donc très fréquent qu'une telle articulation à rotule arrive à un état d'usure inacceptable ce qui peut conduire à un accident ou, au contraire, qu'elle soit remplacée alors qu'elle pouvait encore parfaitement remplir son usage.

Le document GB-1 336 087 décrit une rotule dont le coussinet supérieur comprend un graisseur sous la forme d'une douille 38 qui fait saillie hors du boîtier de la rotule. Ce coussinet est sollicité élastiquement contre la tête de la rotule par un anneau en élastomère comprimé. Cet anneau prend appui d'une part sur le coussinet supérieur mobile et d'autre part sur un couvercle fixe 28. Ce couvercle est percé d'un trou 40 à travers lequel la douille 38 du coussinet fait saillie. Par conséquent, à mesure que la tête de la rotule s'use, la douille s'enfonce dans le trou, ce qui donne une indication de l'usure de la tête et/ou du coussinet inférieur.

Il s'agit là d'une rotule de conception ancienne qu'il était encore nécessaire de graisser. Cependant, les rotules modernes sont graissées à vie de sorte qu'il n'y a plus de graisseur. Le couvercle fixe 28 a pour but d'obturer hermétiquement le boîtier : la présence d'un trou serait donc préjudiciable.

La présente invention a pour but de pallier à cet inconvénient de l'art antérieur en définissant une articulation à rotule de conception moderne pour laquelle il est très aisé de déterminer si elle peut encore remplir son usage.

Pour ce faire, la présente invention prévoit selon une première forme de réalisation une articulation à rotule, notamment pour système de direction de véhicule automobile, du type comprenant un boîtier, une rotule engagée à l'intérieur du boîtier, formée d'une tête sphérique solidaire d'une tige émergeant par une ouverture du boîtier, un coussinet inférieur définissant une portée inférieure entourant la tête de la rotule du côté de l'ouverture du boîtier et un coussinet supérieur mobile opposé définissant une portée supérieure, ledit coussinet supérieur étant sollicité par un ressort contre la tête de la rotule, de manière à pouvoir se déplacer vers le coussinet inférieur à mesure que la tête de la rotule s'use, ladite articulation comprenant des moyens indicateurs d'usure de la tête de la rotule adaptés à donner une indication sur l'usure de ladite tête en fonction du déplacement dudit coussinet supérieur mobile, les moyens indicateurs d'usure comprenant un élément de contact adapté à venir en contact avec une partie dudit coussinet supérieur mobile, l'élément de contact étant disposé dans le chemin de déplacement translatif dudit coussinet supérieur en direction dudit coussinet inférieur.

Etant donné qu'il est difficile de mesurer directement l'usure de la tête de la rotule au niveau de la diminution de son diamètre radial, il a fallu utiliser un paramètre dépendant de cette usure qui soit plus facilement déterminable. En utilisant le déplacement du coussinet supérieur, cela permet de transformer une grandeur radiale en une grandeur axiale plus facilement mesurable.

Selon une deuxième forme de réalisation, l'invention prévoit une articulation à rotule, notamment pour système de direction de véhicule automobile, du type comprenant un boîtier, une rotule engagée à l'intérieur du boîtier, formée d'une tête sphérique solidaire d'une tige émergeant par une ouverture du boîtier, un coussinet inférieur définissant une portée inférieure entourant la tête de la rotule du côté de l'ouverture du boîtier et un coussinet supérieur mobile opposé définissant une portée supérieure, ledit coussinet supérieur étant sollicité par un ressort contre la tête de la rotule, de manière à pouvoir se déplacer vers le coussinet inférieur à mesure que le coussinet inférieur s'use, ladite articulation comprenant des moyens indicateurs d'usure du coussinet inférieur adaptés à donner une indication sur l'usure dudit coussinet, les moyens indicateurs d'usure comprenant un élément de contact adapté à venir en contact avec la tête de la rotule sollicitée par le ressort.

Là encore, le même principe est utilisé, c'est-à-dire la mise en place d'un élément dans le chemin de déplacement d'un organe mobile de l'articulation sous l'effet de l'usure. Dans cette forme de réalisation qui s'applique plus particulièrement à des articulations sujettes à une usure du coussinet inférieur, c'est la tête de la rotule qui fait office d'organe mobile destiné à venir en contact avec l'élément de contact des moyens indicateurs d'usure. Il est évident que ce second mode de réalisation est inefficace pour des articulations dont le coussinet inférieur ne s'use pas.

Les moyens indicateurs, selon une première forme de réalisation, donnent une indication électrique visualisable sous la forme d'un témoin lumineux.

Dans une seconde forme de réalisation, les moyens indicateurs donnent une indication visuelle discrète représentative d'une valeur limite d'usure acceptable.

En variante, les moyens indicateurs donnent une indication visuelle continue représentative de l'usure progressive de la tête.

Avantageusement, l'élément de contact est solidaire d'une partie électriquement conductrice adaptée à établir un contact électrique après sollicitation dudit élément de contact par la tête ou par le coussinet supérieur.

Selon une seconde forme de réalisation, l'élément de contact comprend une surface de came adaptée à venir en contact de glissement avec une partie du coussinet supérieur de manière à déplacer translativement ledit élément de contact dans une direction perpendiculaire à la direction de déplacement dudit coussinet supérieur.

Selon une troisième forme de réalisation, l'élément de contact comprend un embout adapté à rompre sous l'action dudit coussinet supérieur ou de la tête, ledit embout étant relié à une tige et un ressort la sollicite en éloignement dudit embout de sorte que la rupture dudit élément libère ladite tige.

Selon une autre forme de réalisation, ledit élément de contact est maintenu dans le chemin de déplacement du coussinet supérieur ou de la tête par une liaison apte à rompre sous l'action de contact du coussinet supérieur ou de la tête.

D'autres caractéristiques de l'invention apparaîtront au cours de la description qui va suivre, donnée à titre d'exemple non limitatif, en regard des dessins joints, et qui fera bien comprendre comment l'invention peut être réalisée.

Sur les dessins :
- la figure 1 est une vue en coupe sur la moitié gauche et en perspective sur la moitié droite d'une articulation à rotule selon un mode de réalisation de l'invention, l'articulation à rotule étant à l'état neuf,
- la figure 2 est une vue de l'articulation à rotule de la figure 1 dans un état d'usure avancé,
- la figure 3 est une vue en section transversale d'un moyen d'indicateur d'usure utilisé dans la présente invention,
- la figure 4 est une vue en coupe transversale d'un second moyen indicateur d'usure utilisé dans la présente invention,
- la figure 5 est une vue en section transversale d'un troisième mode de réalisation d'un indicateur d'usure utilisé dans la présente invention, et
- la figure 6 est une vue en coupe d'une articulation à rotule selon une seconde forme de réalisation de l'invention.

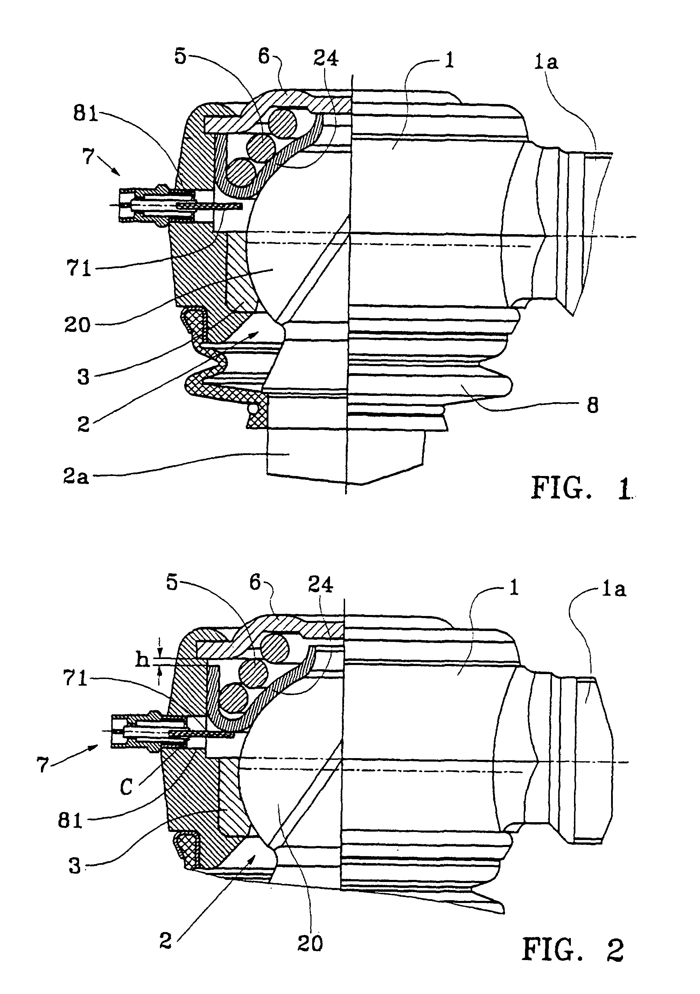

L'articulation à rotule, représentée sur les figures 1 et 2 comporte un boîtier 1 avec une queue de boîtier la, et une rotule 2 dont la tête sphérique 20 est disposée à l'intérieur du boîtier et dont la tige 2a sort par une ouverture du boîtier. Le boîtier renferme un coussinet inférieur 3, présentant une surface sphérique creuse adaptée à recevoir la tête sphérique 20 de la rotule et une surface externe adaptée à se loger en étant calée dans le boîtier, du côté de l'ouverture de celui-ci. Le coussinet supérieur 24 est maintenu appliqué contre la tête sphérique 20 de la rotule par le ressort 5, qui prend par ailleurs appui contre un bouchon 6 serti dans le boîtier.

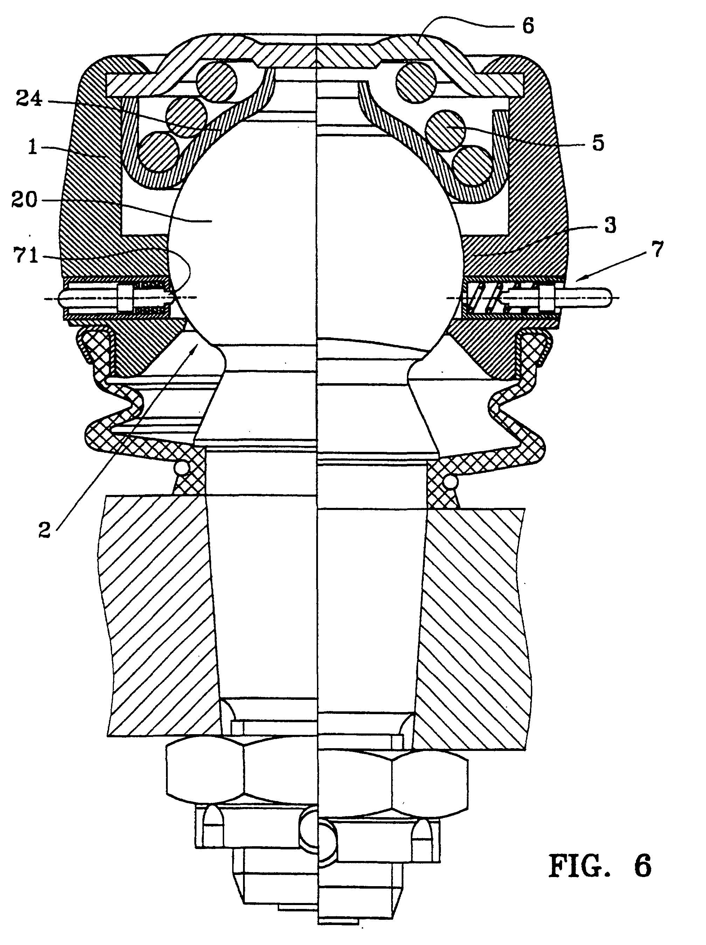

Le coussinet supérieur 24 peut donc se déplacer vers le bas sur les figures 1 et 2 sous l'action du ressort à mesure que la tête sphérique 20 de la rotule s'use. Le coussinet 24 et son ressort associé constituent ensemble un dispositif de rattrapage de jeu de manière à ce que la tête sphérique de la rotule soit toujours parfaitement logée à l'intérieur du boîtier. Il existe bien entendu d'autres dispositifs de rattrapage de jeu comme on le verra ci-après en référence à la figure 6.

L'articulation à rotule de la figure 1 est une articulation neuve, la tête 20 étant parfaitement sphérique. Dans cet état, le coussinet supérieur 24 est poussé par la tête sphérique 20 contre le bouchon 6. Le ressort 5 ne remplit dans cet état encore aucune fonction. En revanche, comme on peut le voir sur la figure 2, lorsque la tête 2 de la rotule est usée, le ressort 5 pousse le coussinet 24 toujours en contact de la tête, et l'on peut voir que coussinet 24 à effectuer un déplacement vers le bas d'une hauteur *h*. Cette hauteur de déplacement du coussinet supérieur 24 est directement représentative de l'état d'usure de la tête 20 de la rotule.

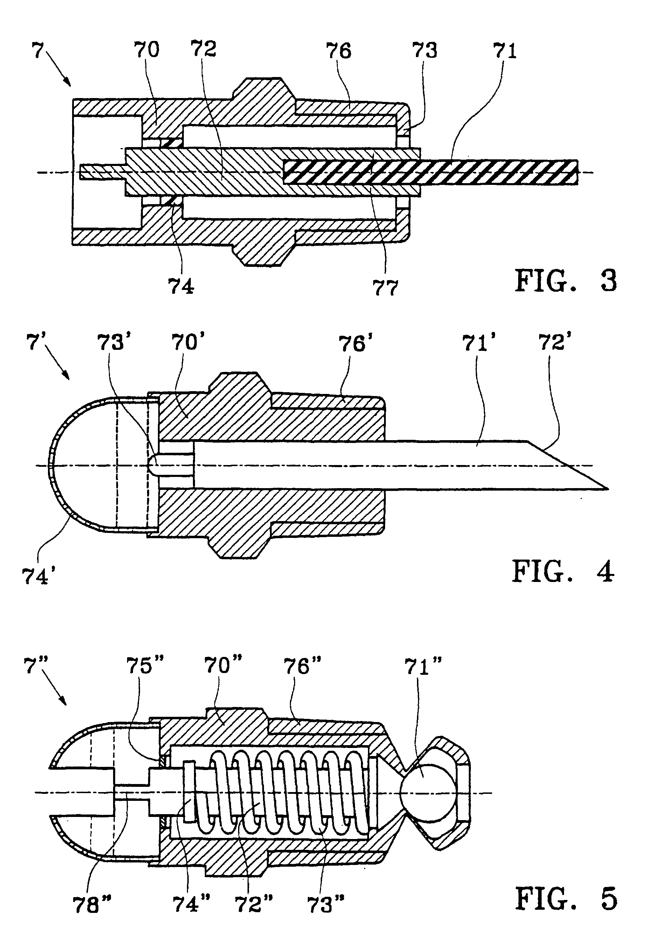

Selon l'invention, cet état d'usure de la tête 20 de la rotule est détecté au moyen d'un dispositif indicateur d'usure désigné dans son ensemble par la référence numérique 7. Dans l'exemple de réalisation représenté sur les figures 1 et 2, le dispositif indicateur d'usure 7 est disposé sur le boîtier 1 de l'articulation à un niveau situé sensiblement entre le coussinet supérieur 24 et le coussinet inférieur 3. Pour ce faire, un logement 81 par exemple fileté a été ménagé dans la paroi du boîtier 1 de manière à faire communiquer l'intérieur et l'extérieur du boîtier. Le dispositif indicateur d'usure 7 est donc simplement vissé dans ce logement 81. En se référant à la figure 3 qui montre de façon agrandie le dispositif indicateur d'usure représenté sur les figures 1 et 2, on peut voir que le dispositif comprend un corps sensiblement cylindrique 70 qui définit une partie filetée 76 destinée à venir en prise avec le filetage interne du logement 81 réalisé dans le boîtier 1. En outre, le dispositif indicateur d'usure 7 comprend un élément de contact 71 sous la forme d'une tige qui à l'état monté s'étend en dessous du coussinet supérieur 24 comme on peut le voir sur la figure 1. La tige de contact 71 est réalisée en un matériau non conducteur mais est reçue dans un manchon 72 réalisé en un matériau conducteur. Le manchon 72 est maintenu dans le corps 70 par un anneau d'isolation et de maintien 74 réalisé en un matériau souple. Il est ainsi aisé de comprendre que le manchon 72 peut être déplacé à l'intérieur du corps 70 en sollicitant la tige de contact 71 hors de son axe de sorte que l'extrémité 77 du manchon 72 vienne en contact avec l'extrémité 73 du corps 70 également réalisé en un matériau électriquement conducteur. En reliant le corps 70 et le manchon 72 à une alimentation électrique, le contact du manchon 72 et du corps 70 a pour effet de fermer le circuit en établissant le contact. Ainsi, toute sollicitation de la tige de contact 71 hors de son axe a pour effet d'établir un contact électrique entre le manchon 72 et le corps 70. En montant un témoin lumineux dans le circuit, il sera très aisé d'indiquer qu'il y a contact entre ces deux éléments. En déterminant avec précision l'emplacement du logement 81 dans le boîtier 1, il est possible d'ajuster avec précision la position de la tige de contact 71 par rapport un coussinet supérieur 24 comme représenté sur la figure 1. A l'état neuf de la figure 1, la tige de contact 71 n'est pas en contact avec le coussinet supérieur 24. A mesure que la tête sphérique s'use, le coussinet 24 descend en direction du coussinet inférieur 3 et se rapproche de la tige de contact 71. A partir du moment où le contact est établi entre le coussinet 24 et la tige de contact 71, le coussinet 24 a pour effet de pousser la tige de contact 71 vers le bas ce qui conduit inévitablement à un moment donné au contact entre le manchon 72 et le corps 70. La hauteur sur laquelle s'est alors déplacé le coussinet supérieur 24 est égale à la hauteur *h* visible sur la figure 2. La valeur de la hauteur *h* doit être fixée avec précision et doit correspondre à un état d'usure limite acceptable de la tête sphérique 20. La valeur de cette hauteur *h* peut être déterminée empiriquement. Ainsi, dès que le coussinet supérieur 24 s'est déplacé de cette hauteur *h*, le contact électrique est établi et le voyant lumineux (non représenté) s'allume, ce qui indique que la tête sphérique 20 de la rotule a subi une usure limite. L'utilisateur du véhicule, en consultant son tableau de bord sur lequel figure le témoin lumineux, sait alors qu'il est temps de changer l'articulation à rotule concernée.

Le dispositif indicateur d'usure 7 qui vient d'être décrit indique par conséquent que la tête sphérique 20 de la rotule a atteint une valeur limite d'usure acceptable. Cette valeur n'a pas été détectée directement mais déduite d'un paramètre directement lié à l'état d'usure, en l'occurrence le déplacement translatif du coussinet supérieur 24 qui sert de dispositif de rattrapage de jeu. L'emplacement de la structure du dispositif indicateur d'usure 7 qui vient être décrit ne doit pas être considéré comme étant le seul possible. En effet, il est tout à fait envisageable d'utiliser d'autres types d'indicateurs d'usure que l'on dispose à d'autres endroits de l'articulation à rotule. Par exemple, il est possible de ménager une fenêtre dans le bouchon 6 pour observer le déplacement du coussinet 24 par rapport à une échelle graduée. D'autres formes de réalisation d'un dispositif d'indicateur d'usure sont représentées sur les figures 4 et 5 et peuvent être utilisées en remplacement du dispositif représenté sur les figures 1, 2 et 3.

Sur la figure 4, le dispositif indicateur d'usure est un dispositif qui donne une indication visuelle et continue de l'usure progressive de la tête sphérique en fonction du déplacement du coussinet 24. Pour ce faire, le dispositif 7' comprend un corps 70 également muni d'une partie filetée 76' destinée à venir en prise filetée dans le logement 81 du boîtier 1. Le corps 70 définit intérieurement un passage cylindrique de glissement dans lequel est engagé un élément de contact 71' qui peut librement coulisser à l'intérieur. L'extrémité de la tige 71' qui pénètre à l'intérieur du boîtier est pourvue d'une surface de came inclinée 72' destinée à venir en contact avec la partie inférieure du coussinet supérieure 24. Par conséquent, étant donné que la tige de contact 71' est librement coulissante à l'intérieur du corps 70', l'action de déplacement vers le bas du coussinet supérieur 24 sur la pente 72' a pour effet de déplacer la tige de contact 71' à l'intérieur du corps 70'. A l'extrémité opposée, la tige 71' est dotée d'un appendice de visualisation 73' qui donne une indication de l'avancement de la tige 71' à l'intérieur du corps 70'. Afin de protéger cet appendice de visualisation 73' et également la tige 71' des saletés, la partie externe du corps 70' est dotée d'un dôme en plastique transparent 74'. Par conséquent, avec ce dispositif 7', il est possible d'avoir une indication continue sur l'état d'usure progressive de la tête sphérique 20.

En se référant maintenant à la figure 5, le dispositif indicateur d'usure 7" est un dispositif d'indicateur visuel et électrique à la fois. En effet, ce dispositif 7" est également doté d'un corps 70" similaire à celui des dispositif 7 et 7' et comprend donc une partie filetée extérieurement 76". A l'extrémité du corps 70' dirigé vers l'intérieur du boîtier 1, le corps forme un embout de rupture 71" destiné à être cassé par le coussinet 24 lors de son déplacement vers le bas en direction de son coussinet inférieur 3. Cet embout de rotule 71" est solidaire à l'état initial d'une tige 72" sollicitée vers l'extérieur, c'est-à-dire en éloignement de l'embout de rupture 71", par un ressort 73". En outre, la tige 72" est dotée d'un anneau de butée 74" destiné à venir en butée après rupture de l'embout de rupture 71", contre un anneau d'arrêt 75" formé le corps 70". A son extrémité libre dirigée vers l'extérieur, la tige 72" est dotée d'un picot 78" visible de l'extérieur. Ainsi, dès que le coussinet supérieur 24 a rompu l'embout de rupture 71", la tige 72" est poussée par le ressort 73" jusqu'à son anneau de butée 74" vienne en contact avec l'élément d'arrêt 75". Le contact de ces deux derniers éléments établit un contact électrique tel que celui du dispositif 7 de la figure 3 qui peut par exemple allumé un témoin lumineux situé sur le tableau de bord du véhicule. En outre, il est directement visible en observant l'état d'avancement du picot 78' si l'embout de rupture 71' est encore en place ou non. Ce dispositif indicateur d'usure donne donc une indication à la fois visuelle et électrique.

Il est donc compréhensible que le type particulier de dispositif indicateur d'usure ne limite pas la portée de l'invention. Il suffit que l'indicateur donne une indication sur l'état de l'usure de la tête sphérique 20 de la rotule, ce qui est rendu plus facilement possible par la mesure d'un paramètre directement dépendant comme le déplacement du coussinet supérieur 24.

En se référant maintenant à la figure 6, on voit une articulation selon une seconde forme de réalisation. Ces éléments constitutifs sont identiques à ceux de la première forme de réalisation des figures 1 et 2, excepté que le coussinet inférieur 3 fait partie intégrante du boîtier 1 et que l'indicateur d'usure 7 est placé au niveau du coussinet inférieur. L'élément de contact est donc ici adapté à venir en contact avec la tête 20 de la rotule à mesure que le coussinet inférieur s'use. En effet, ce second mode de réalisation est particulièrement adapté aux articulations sujettes à une usure du coussinet inférieur, mais pas exclusivement. La tête de la rotule peut également subir une usure. L'élément de contact doit être placé en-dessous du diamètre maximal de la tête de manière à ce que cette dernière puisse venir en contact de l'élément de contact. le type d'indicateur utilisé peut être de ceux des figures 3 à 5 ou d'autres.

Que le contact se fasse sur le coussinet supérieur ou sur la tête de la rotule, le principe reste le même et les mêmes indicateurs peuvent être utilisés.

## Revendications

1. Articulation à rotule, notamment pour système de direction de véhicule automobile, du type comprenant un boîtier (1), une rotule (2) engagée à l'intérieur du boîtier, formée d'une tête sphérique solidaire (20) d'une tige (2a) émergeant par une ouverture (16) du boîtier, un coussinet inférieur (3) définissant une portée inférieure entourant la tête de la rotule du côté de l'ouverture du boîtier et un coussinet supérieur (24) mobile opposé définissant une portée supérieure, ledit coussinet supérieur étant sollicité par un ressort (5) contre la tête (20) de la rotule, de manière à pouvoir se déplacer vers le coussinet inférieur (24) à mesure que la tête (20) de la rotule s'use, ladite articulation comprenant des moyens indicateurs d'usure (7, 7', 7") de la tête (20) de la rotule adaptés à donner une indication sur l'usure de ladite tête (20) en fonction du déplacement dudit coussinet supérieur mobile (24), **caractérisé en ce que** les moyens indicateurs (7, 7', 7") d'usure comprennent un élément de contact (71, 71', 71") adapté à venir en contact avec une partie dudit coussinet supérieur mobile (24), l'élément de contact (71, 71', 71") étant disposé dans le chemin de déplacement translatif dudit coussinet supérieur (24) en direction dudit coussinet inférieur (3).

2. Articulation à rotule, notamment pour système de direction de véhicule automobile, du type comprenant un boîtier (1), une rotule (2) engagée à l'intérieur du boîtier, formée d'une tête sphérique solidaire (20) d'une tige (2a) émergeant par une ouverture (16) du boîtier, un coussinet inférieur (3) définissant une portée inférieure entourant la tête de la rotule du côté de l'ouverture du boîtier et un coussinet supérieur (24) mobile opposé définissant une portée supérieure, ledit coussinet supérieur étant sollicité par un ressort (5) contre la tête (20) de la rotule, de manière à pouvoir se déplacer vers le coussinet inférieur (24) à mesure que le coussinet inférieur (3) s'use, ladite articulation comprenant des moyens indicateurs d'usure (7, 7', 7") du coussinet inférieur adaptés à donner une indication sur l'usure dudit coussinet, **caractérisée en ce que** les moyens indicateurs d'usure comprennent un élément de contact (71, 71', 71") adapté à venir en contact avec la tête (20) de la rotule sollicitée par le ressort (5).

3. Articulation à rotule selon la revendication 1 ou 2, dans laquelle les moyens indicateurs (7, 7") donnent une indication électrique visualisable sous la forme d'un témoin lumineux.

4. Articulation à rotule selon la revendication 1, 2 ou 3, dans laquelle les moyens indicateurs (7, 7") donnent une indication visuelle discrète représentative d'une valeur limite d'usure acceptable.

5. Articulation à rotule selon la revendication 1, 2 ou 3, dans laquelle les moyens indicateurs (7') donnent une indication visuelle continue représentative de l'usure progressive de la tête.

6. Articulation à rotule selon l'une quelconque des revendications 1 à 4, dans laquelle l'élément de contact (71) est solidaire d'une partie électriquement conductrice (72) adaptée à établir un contact électrique après sollicitation dudit élément de contact (71).

7. Articulation à rotule selon la revendication 1, dans laquelle l'élément de contact (71') comprend une surface de came (72') adaptée à venir en contact de glissement avec le coussinet supérieur (24) de manière à déplacer translativement ledit élément de contact (71') dans une direction perpendiculaire à la direction de déplacement dudit coussinet supérieur (24).

8. Articulation à rotule selon la revendication 1 ou 2, dans laquelle l'élément de contact comprend un embout (71") adapté à rompre sous l'action dudit coussinet supérieur (24) ou de la tête (20), ledit embout (71") étant relié à une tige (72") et un ressort (73") la sollicite en éloignement dudit embout (71") de sorte que la rupture dudit élément libère ladite tige (72").

9. Articulation à rotule selon la revendication 1 ou 2, dans laquelle ledit élément de contact (71) est maintenu dans le chemin de déplacement du coussinet supérieur ou de la tête par une liaison apte à rompre sous l'action de contact du coussinet supérieur ou de la tête.

## Patentansprüche

1. Kugelgelenk, insbesondere für das Lenksystem eines Kraftfahrzeuges mit einem Gehäuse (1), einer im inneren des Gehäuses in Eingriff stehenden Gelenkkugel (2), die von einem sphärischen Kopf (20) gebildet wird, der fest mit einer Stange (2a) verbunden ist, die aus einer Öffnung (16) des Gehäuses hervortritt, einem unteren Lager (3), das eine untere Lagerfläche definiert, welche den Kopf der Lagerkugel auf der Seite der Öffnung des Gehäuses umgibt, und einem oberen, beweglichen, gegenüberliegenden Lager (24), das eine obere Lagerfläche definiert, wobei das obere Lager durch eine Feder (5) gegen den Kopf (20) der Lagerkugel derart vorgespannt ist, daß es sich in dem Maß zum unteren Lager (24) hin verschieben kann, in dem sich der Kopf (20) der Lagerkugel abnützt, wobei das Gelenk Anzeigemittel (7, 7', 7") für die Abnützung des Kopfes (20) der Lagerkugel umfaßt, die geeignet sind, eine Anzeige der Abnützung dieses Kopfes (20) in Abhängigkeit von der Verschiebung des beweglichen oberen Lagers (24) zu geben, **dadurch gekennzeichnet, daß** die Anzeigemittel (7, 7', 7") für die Abnützung ein Kontaktelement (71, 71', 71") umfassen, das mit einem Teil des beweglichen oberen Lagers (24) in Berührung kommen kann, wobei das Kontaktelement (71, 71', 71") im Weg der Translationsverschiebung des oberen Lagers (24) in Richtung zum unteren Lager (3) hin angeordnet ist.

2. Kugelgelenk, insbesondere für das Lenksystem eines Kraftfahrzeuges mit einem Gehäuse (1), einer im Inneren des Gehäuses im Eingriff stehenden Gelenkkugel (2), die von einem sphärischen Kopf (20) gebildet wird, der fest mit einer Stange (2a) verbunden ist, die aus einer Öffnung (16) des Gehäuses hervortritt, einem unteren Lager (3), das eine untere Lagerfläche definiert, welche den Kopf der Lagerkugel auf der Seite der Öffnung des Gehäuses umschließt, und einem beweglichen, gegenüberliegenden oberen Lager (24), das eine obere Lagerfläche definiert, wobei das obere Lager durch eine Feder (5) gegen den Kopf (20) der Lagerkugel in der Weise vorgespannt ist, daß sie sich zum unteren Lager (24) hin in dem Maß verschieben kann, in welchem sich das untere Lager (3) abnützt, wobei das Gelenk Anzeigemittel (7, 7', 7") für die Abnützung des unteren Lagers umfaßt, die geeignet sind, eine Anzeige der Abnutzung dieses Lagers abzugeben, **dadurch gekennzeichnet, daß** die Anzeigemittel für die Abnutzung ein Kontaktelement (71, 71', 71") umfassen, das mit dem Kopf (20) der Lagerkugel unter der Vorspannung der Feder (5) in Berührung kommen kann.

3. Kugelgelenk nach Anspruch 1 oder 2, bei dem die Anzeigemittel (7, 7") eine elektrische Anzeige liefern, die in Form einer Leuchtanzeige sichtbar gemacht werden kann.

4. Kugelgelenk nach Anspruch 1, 2, oder 3, bei dem die Anzeigemittel (7, 7") eine gesonderte optische Anzeige liefern, die für einen Grenzwert einer akzeptablen Abnutzung repräsentativ ist.

5. Kugelgelenk nach Anspruch 1, 2, oder 3, bei dem die Anzeigemittel (7') eine kontinuierliche optische Anzeige liefem, die für die fortschreitende Abnutzung des Kopfes repräsentativ ist.

6. Kugelgelenk nach einem der Ansprüche 1 bis 4, bei dem das Kontaktelement (71) fest mit einem elektrisch leitenden Teil (72) verbunden ist, der in der Lage ist, nach einer Vorspannung des Kontaktelementes (71) einen elektrischen Kontakt zu bilden.

7. Kugelgelenk nach Anspruch 1, bei dem das Kontaktelement (71') eine Nockenoberfläche (72') umfaßt, die mit dem oberen Lager (24) derart in gleitende Berührung kommen kann, daß das Kontaktelement (71') in einer Richtung translatorisch verschoben wird, die senkrecht zur Verschiebungsrichtung des oberen Lagers (24) verläuft.

8. Kugelgelenk nach Anspruch 1 oder 2, bei dem das Kontaktelement einen Ansatz (71") umfaßt, der unter der Wirkung des oberen Lagers (24) oder des Kopfes (20) brechen kann, wobei der Ansatz (71") mit einer Stange (72") verbunden ist und das eine Feder (63") diese im Abstand von diesem Ansatz (71") derart vorspannt, daß ein Brechen des Elementes die Stange (72") freigibt.

9. Kugelgelenk nach Anspruch 1 oder 2, bei der das Kontaktelement (71) im Verschiebungsweg des oberen Lagers oder des Kopfes durch eine Verbindung gehalten wird, die unter der Wirkung der Berührung des oberen Lagers oder des Kopfes brechen kann.

## Claims

1. Pivot joint, particularly intended for automobile steering systems, that comprises a housing (1) and a pivot (2) lodged inside said housing, said pivot consisting of a spherical head (20) constructed as part of a shank (2a) that projects through an aperture (16) in the housing, a lower bushing (3) that forms a lower bearing seat enclosing the head of the pivot on the open side of the housing and an opposite movable upper bushing (24) that forms an upper bearing seat, said upper bushing being pressed by a spring (5) against the head (20) of the pivot so that it is moved towards the lower bushing (24) as the pivot head (20) wears, said pivot joint comprising means (7, 7', 7") for indicating the wear of the head (20) of the pivot capable of giving an indication of the wear of said head (20) relative to the movement of said upper movable bushing (24), **characterized in that** said wear indicator means (7, 7', 7") comprise a contact component (71, 71', 71") capable of coming into contact with a part of said upper movable bushing (24), said contact component (71, 71', 72") being disposed in the path of translational movement of said upper bushing (24) towards said lower bushing (3).

2. Pivot joint, particularly intended for automobile steering systems, that comprises a housing (1) and a pivot (2) lodged inside said housing, said pivot head consisting of a spherical head (20) constructed as part of a shank (2a) that projects through an aperture (16) in the housing, a lower bushing (3) that forms a lower bearing seat enclosing the head of the pivot on the open side of the housing and an opposite movable upper bushing (24) that forms an upper bearing seat, said upper bushing being pressed by a spring (5) against the head (20) of the pivot so that it is moved towards the lower bushing (24) as the lower bushing (3) wears, said pivot joint comprising means (7, 7', 7") for indicating the wear of the lower bushing capable of indicating the wear of said bushing, **characterized in that** the wear indicator means comprise a contact component (71, 71', 71") capable of coming into contact with the head (20) of the pivot pressed by the spring (5).

3. Pivot joint of claim 1 or 2 wherein indicator means (7, 7") give an electrical indication that can be displayed as an indicator lamp.

4. Pivot joint of claim 1, 2 or 3 wherein indicator means (7, 7") provide a discrete visual indication that represents a value of the acceptable limit of wear.

5. Pivot joint of claim 1, 2 or 3 wherein indicator means (7') give a continuous visual indication that represents the progressive wear of the head.

6. Pivot joint of any of claims 1 to 4 wherein contact component (71) is constructed as part of a component (72) that conducts electricity and is capable of establishing an electrical contact when activated by the said contact component (71).

7. Pivot joint of claim 1 wherein contact component (71') comprises a cam surface (72') designed to slide against the upper bushing (24), thereby causing the said contact component (71') to move in translation in a direction perpendicular to the direction of displacement of said upper bushing (24).

8. Pivot joint of claim 1 or 2 wherein contact component comprises an endpiece (71") designed to break under the effect of said upper bushing (24) or head¹ (20), said endpiece (71") being connected to a shank (72"), a spring (73") drawing said shank away from said endpiece (71") such that the breakage of said component frees said shank (72").

9. Pivot joint of claim 1 or 2 wherein said contact component (71) is maintained in the path of displacement of the upper bushing or the head by a connection designed to break when it comes into contact with the upper bushing or the head.
